(19) Europäisches Patentamt
European Patent Office
Office européen des brevets

(11) **EP 0 884 092 A1**

(12) **EUROPÄISCHE PATENTANMELDUNG**

(43) Veröffentlichungstag:
16.12.1998 Patentblatt 1998/51

(51) Int. Cl.⁶: **B01D 53/50**

(21) Anmeldenummer: 98110590.1

(22) Anmeldetag: 09.06.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 13.06.1997 CH 1452/97

(71) Anmelder:
**Von Roll Umwelttechnik AG**
**8005 Zürich (CH)**

(72) Erfinder: **Frey, Rudolf**
**8307 Effretikon (CH)**

(74) Vertreter:
**Patentanwälte**
**Schaad, Balass, Menzl & Partner AG**
**Dufourstrasse 101**
**Postfach**
**8034 Zürich (CH)**

(54) **Verfahren zum Entfernen von Schwefeldioxid aus Rauchgasen**

(57) Das Verfahren zum Entfernen von Schwefeldioxid aus Rauchgasen durch Waschen mit einer Waschlösung, insbesondere für in einer Abfall-, Schlamm- oder Klärschlammverbrennungsanlage anfallendes Rauchgas verwendet eine Kaliumhydroxid enthaltende Waschlösung.

Fig. 1

EP 0 884 092 A1

**Beschreibung**

Die Erfindung betrifft ein Verfahren zum Entfernen von Schwefeldioxid aus Rauchgasen gemäss dem Oberbegriff von Anspruch 1.

Es ist bekannt in Rauchgasreinigungsanlagen oder Rauchgasentschwefelungsanlagen das in den Rauchgasen enthaltene Schwefeldioxid entweder direkt mit Kalkhydrat oder indirekt mit einer Waschlösung unter Zusatz von Natronlauge und anschliessender Umsetzung mit Kalkhydrat zu Gips umzusetzen.

Ein Nachteil dieser bekannten Verfahren ist darin zu sehen, dass der beispielsweise in einer Abfallverbrennungsanlage gewonnene Gips Verunreinigungen aufweist und daher ein unnützes Produkt ist. Da das Produkt nicht verwertbar ist fallen zudem Kosten für die Entsorgung an. Der Gips ist einer Deponie zuzuführen, was nebst den hohen Entsorgungskosten zudem zu einer Umweltbelastung führt.

Es ist Aufgabe der vorliegenden Erfindung ein Verfahren zur Rauchgasreinigung beziehungsweise zur Rauchgasentschwefelung vorzuschlagen, welches keinen Deponieaufwand bedarf und keine Umweltbelastung verursacht.

Diese Aufgabe wird gelöst mit einem Verfahren aufweisend die Merkmale von Anspruch 1. Die Unteransprüche 2 bis 8 beziehen sich auf weitere, vorteilhafte Ausgestaltungen des erfindungsgemässen Verfahrens.

Das erfindungsgemässe Verfahren zur Rauchgasentschwefelung verwendet eine Kaliumhydroxid enthaltende Lösung zum Waschen des Rauchgases.

Ein Vorteil des erfindungsgemässen Verfahrens ist darin zu sehen, dass das im Rauchgas enthaltene Schwefeldioxid mit dem in der Waschlösung enthaltenen Kaliumhydroxid zu Kaliumsulfat reagiert, welches als marktfähiges, verkäufliches Produkt verwertbar ist, insbesondere als Dünger.

Das Schwefeldioxid enthaltende Rauchgas wird mit einer Waschlösung gewaschen, welche durch Zugabe von Kaliumhydroxid auf einem pH-Wert von 4 bis 7, vorzugsweise auf einem pH-Wert von 5 bis 6,5, gehalten wird. Vermutlich laufen die folgenden Reaktionen beim Waschvorgang ab:

a)

$$KOH + SO_2 \rightarrow KHSO_3$$

b)

$$2\,KOH + SO_2 \rightarrow K_2SO_3 + H_2O$$

c)

$$K_2SO_3 + \tfrac{1}{2}\,O_2 \rightarrow K_2SO_4$$

Das in einer Lösung anfallende Kaliumsulfat kann als Sole oder in kristalliner Form als marktfähiges Produkt, zum Beispiel als ein Düngemittel verkauft werden.

Das erfindungsgemässe Verfahren ist insbesondere geeignet zum Reinigen von Rauchgases aus Abfall-, Schlamm- oder Klärschlammverbrennungsanlagen.

Sofern das Rauchgas einen tiefen $O_2$-Gehalt aufweist läuft die mit c) bezeichnete Reaktion verzögert ab. In einer vorteilhaften Ausgestaltung der Erfindung wird der Waschlösung Sauerstoff, zum Beispiel in Form von Pressluft und insbesondere unter Ausbildung einer Verwirbelung zugeführt, was die mit c) bezeichnete Reaktion wesentlich beschleunigt.

In einer vorteilhaften Ausgestaltung des Verfahrens werden die nebst dem Kaliumsulfat eventuell in der Waschlösung vorhandenen Spurenelemente wie Spurenmetalle vollständig oder gezielt derart ausgefällt, dass das Düngemittel auch Spurenelemente in ausreichender Konzentration aufweist. Die Konzentration kann derart gewählt sein, dass das Düngemittel Spurenelemente in einer für die Düngung beziehungsweise für den Düngungszweck bevorzugten Konzentration aufweist.

Das erfindungsgemässe Verfahren wird an Hand eines Ausführungsbeispieles im Detail beschrieben. Es zeigt:

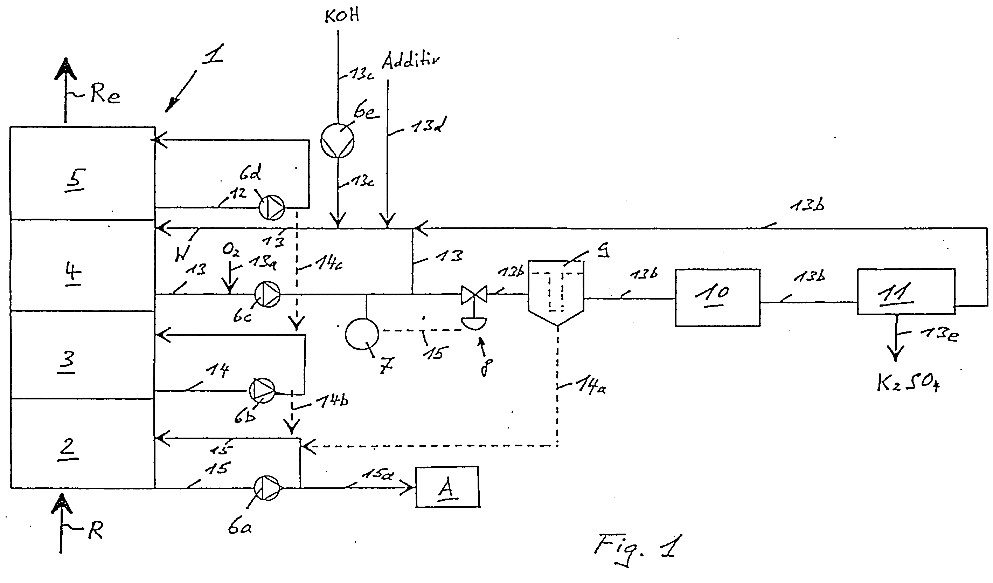

Fig. 1     eine schematische Darstellung einer Vorrichtung zum Entfernen von Schwefeldioxid aus Rauchgasen einer Müllverbrennungsanlage.

Der Rauchgasreinigungsvorrichtung 1, auch als Rauchgaswäscher bezeichnet, wird aus einer nicht dargestellten Verbrennungskammer, in welcher Müll verbrannt wird, ein Rauchgas R zugeführt, das nach dem Durchströmen der Rauchgasreinigungsvorrichtung 1 als Reingas Re an die Umwelt abgegeben wird. Um die in den Rauchgasen R enthaltenen Halogenwasserstoffe (HCl, HF, HBr) getrennt von Schwefeldioxid $SO_2$ zu absorbieren und das Rauchgas R mit Wasserdampf zu sättigen wird das Rauchgas R zunächst einer ersten Waschstufe, einer Quenchstufe 2 zugeführt, welche etwa 80% bis 90% der im Rauchgas R vorhandenen Halogenwasserstoffe entfernt. Die Quenchstufe 2 weist einen Wasserkreislauf 15 sowie eine Umwälzpumpe 6a auf, wobei ein Teilstrom der Quenchwassermenge über eine Leitung 15a und nicht dargestellte Ventile einer Abwasserreinigungsanlage A zugeführt wird. Eine nachfolgend angeordnete zweite Waschstufe ist als eine Füllkörperstufe 3 ausgestaltet und dient zur Verbesserung der Sättigung des Rauchgases R sowie zum Entfernen von nach dem Durchlaufen der Quenchstufe 2 verbliebenen Halogenwasserstoffen des Rauchgases R, damit das Reingas Re und das erzeugte Düngemittel einen geringen Gehalt an Halogeniden aufweist. Die Füllkörperstufe 3 weist einen Flüssigkeitskreislauf 14 sowie eine Umwälzpumpe 6b auf, wobei zum Flüssigkeitskreislauf 15 eine Verbindung 14b besteht.

Der Füllkörperstufe 3 ist eine weitere Füllkörperstufe 4 zum Entfernen von Schwefeldioxid nachgeordnet. Der Füllkörperstufe 4 nachgeordnet ist eine weitere Waschstufe, ausgebildet als eine Feinstaubabscheidungsstufe 5, zum Beispiel umfassend eine Ringjet-Stufe. Diese Feinstaubabscheidungsstufe 5 ist zur Feinststaub- und Aerosolabscheidung vorgesehen und weist ebenfalls einen Flüssigkeitskreislauf 12 mit Umwälzpumpe 6d auf, wobei über die Leitung 14c eine Verbindung zum Flüssigkeitskreislauf 14 besteht. Wird die Feinststaubabscheidung durch einen vor- oder nachgeschalteten Gewebefilter erzielt kann auf die Ringjet-Stufe verzichtet werden.

Der für die Füllkörperstufe 4 zum Entfernen von Schwefeldioxid bestimmten, in einem Flüssigkeitskreislauf 13 durch eine Umwälzpumpe 6c geförderten Waschlösung W wird dosiert Kaliumhydroxid (KOH) zugeführt. Das Kaliumhydroxid ist in einem nicht dargestellten Vorratsbehälter gespeichert und gelangt über die Zuleitung 13, gefördert von einer Pumpe 6e, in den Flüssigkeitskreislauf 13. In einer vorteilhaften Ausgestaltung wird der pH-Wert der Waschlösung W mit einem Sensor gemessen und dieses Signal zur Ansteuerung der Pumpe 6e verwendet, um dem pH-Wert der Waschlösung W durch die Zugabe von Kaliumhydroxid auf einem pH-Wert von 4 bis 7 zu halten.

Das Rauchgas R einer Müllverbrennungsanlage weist beispielsweise einen Sauerstoffüberschuss von 10% bis 11% auf. Weist die Müllverbrennungsanlage eine Rauchgasrezirkulation auf, so reduziert sich der Sauerstoffüberschuss im Rauchgas R auf beispielsweise 6% bis 7%, was in der Waschlösung W zu einem hohen Anteil an Kaliumsulfit ($K_2SO_3$) führt. Um den Gehalt an Kaliumsulfit zu reduzierten und den Gehalt an Kaliumsulfat zu erhöhen wird der Waschlösung W nach dem Verlassen der Füllkörperstufe 4 vorteilhafterweise Sauerstoff, beispielsweise in Form von Pressluft, über eine Zuleitung 13a zugegeben, indem zum Beispiel direkt vor der Umwälzpumpe 6c eine Verwirbelung der Waschlösung W erzeugt wird, um die vorgängig mit c) bezeichnete Reaktion wesentlich zu beschleunigen.

Beim Waschen nimmt die Waschlösung W meistens auch Spuren von Schwermetallen wie zum Beispiel Hg, Cd, Zn oder Pb auf. Um ein qualitativ hochwertiges Kaliumsulfat zu gewinnen, erweist es sich als vorteilhaft, diese Spurenmetalle beziehungsweise auch weitere Spurenelemente teilweise oder vollständig zu entfernen. Dies geschieht durch Zugabe eines schwefelhaltigen Fällungsmittels, das über eine Zuleitung 13d dem Flüssigkeitskreislauf 13 zugeführt wird, um schwerlösliche Verbindungen auszufällen. Als Fällungsmittel eignen sich Substanzen wie zum Beispiel Trimercapto-Triazin oder Nalmet®. Als weiteres Additiv kann Aktivkohle oder Herdofenkoks in wässriger Suspension zur Erzielung folgender Effekte zugegeben werden:

- zum Entfernen von organischen Spurenverunreinigungen die aus dem Rauchgas stammen, zum Beispiel chlorierte Phenole, Benzole, Dioxine oder Furane.

- zum Entfernen von metallischem Quecksilber, das durch die Reduktion von Quecksilberverbindungen, z.B. $HgCl_2$, durch die Restkonzentrationen an Sulfit entstehen kann

- als Hilfsmittel für die über die Zuleitung 13b nachgeschaltete Filtration.

Die Konzentration an Kaliumsulfat in der Waschlösung W wird vorzugsweise konstant hoch gehalten, indem mit einer Leitfähigkeitsmessvorrichtung 7 die Konzentration in der Waschlösung W gemessen wird und dieser Wert über eine elektrische Leitung 15 als Stellgrösse für das Regelventil 8 verwendet wird, so dass aus dem Kreislauf 13 geregelt eine Menge Waschlösung W abgezogen wird. Vorteilhafterweise wird die Konzentration derart geregelt, dass die Waschlösung W eine Kaliumsulfat-Konzentration von maximal 15% aufweist. Eine Filtrationsvorrichtung 9 ist dem Regelventil 8 nachgeordnet und dient zur Abtrennung von festen Bestandteilen wie Verunreinigungen und Additiven aus der Waschlösung W. Die Filtrationsvorrichtung 9 ist vorzugsweise als ein Kerzenfilter mit membranbeschichteten Filtertüchern ausgestaltet. Die Feststoffe sammeln sich im konischen Unterteil der Filtrationsvorrichtung 9 und werden periodisch über die Leitung 14a als Schlamm abgezogen. Der Schlamm kann in den Flüssigkeitskreislauf 15 der Quenchstufe 2 zurückgeführt werden.

Die gereinigte Waschlösung W wird einer der Filtrationsvorrichtung 9 nachgeordneten Eindampfanlage 10 beziehungsweise einer Kristallisationsvorrichtung 10 zugeleitet, welche eine Aufkonzentration des Kaliumsulfats auf über 20% bewirkt. Das auskristallisierte Kaliumsulfat wird über eine nachgeordnete Dekantervorrichtung 11 abgetrennt und über den Auslass 13e als Endprodukt ausgetragen. Die restliche Lösung wird über die Leitung 13b dem Kreislauf 13 rückgeführt. Ist das Kaliumsulfat nur in Form einer Sole erforderlich, so kann auf die Kristallisation des Kaliumsulfates verzichtet werden, in dem die Waschlösung W durch Eindampfen auf beispielsweise 15% aufkonzentriert und danach als Sole abgesetzt wird.

**Patentansprüche**

1. Verfahren zum Entfernen von Schwefeldioxid aus Rauchgasen durch Waschen mit einer Waschlösung (W), insbesondere für in einer Abfall-, Schlamm- oder Klärschlammverbrennungsanlage anfallendes Rauchgas (R), dadurch gekennzeichnet, dass das Rauchgas (R) mit einer Kaliumhydroxid (KOH) enthaltenden Lösung gewaschen wird, und dass aus der Waschlösung (W) Kaliumsulfat gewonnen wird.

2. Verfahren nach Anspruch 1, dadurch gekennzeichnet, dass die Kaliumhydroxidlösung derart geregelt der Waschlösung (W) zugeführt wird, dass deren pH einen Wert zwischen 4 und 7, und vorzugsweise einen Wert zwischen 5 und 6.5 aufweist.

3. Verfahren nach einem der vorhergehenden Ansprüche, dadurch gekennzeichnet, dass das in der Waschlösung (W) entstandene Kaliumsulfat ($K_2SO_4$) auf einer Konzentration von maximal 15% gehalten wird.

4. Verfahren nach einem der vorhergehenden Ansprüche, dadurch gekennzeichnet, dass der Waschlösung (W) zusätzlich Sauerstoff, insbesondere in Form von Luft oder Pressluft zugeführt wird, damit allfällig vorhandenes Kaliumsulfit ($K_2SO_3$) zu Kaliumsulfat ($K_2SO_4$) oxidiert wird.

5. Verfahren nach einem der vorhergehenden Ansprüche, dadurch gekennzeichnet, dass der Waschlösung (W) ein Additiv wie ein schwefelhaltiges Fällmittel und/oder ein Absorptionsmittel, beispielsweise Aktivkohle, zugegeben wird.

6. Verfahren nach einem der vorhergehenden Ansprüche, dadurch gekennzeichnet, dass das in der Waschlösung (W) enthaltene Kaliumsulfat aufkonzentriert wird zu einer Sole oder zu auskristallisiertem Kaliumsulfat.

7. Verfahren nach einem der vorhergehenden Ansprüche, dadurch gekennzeichnet, dass Spurenelemente, insbesondere Spurenmetalle teilweise aus der Waschlösung (W) ausgefällt werden, um ein Spurenelemente enthaltendes Kaliumsulfat zu erzeugen.

8. Verwendung des nach einem der Ansprüche 6 bis 7 gewonnenen Kaliumsulfates als Düngemittel.

9. Düngemittel hergestellt mit einem Verfahren nach einem der Ansprüche 6 bis 7.

10. Düngemittel nach Anspruch 9 enthaltend Spurenelemente, insbesondere Spurenmetalle.

Fig. 1

Europäisches
Patentamt

**EUROPÄISCHER RECHERCHENBERICHT**

Nummer der Anmeldung

EP 98 11 0590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 238 811 A (BABCOCK ANLAGEN AG) 30. September 1987 * Ansprüche 1,2,4 * --- | 1,2,4 | B01D53/50 |
| X | DATABASE WPI Derwent Publications Ltd., London, GB; AN 95182191 XP002054602 * Zusammenfassung * & JP 07 100331 A (IDEKO ENG KK) 4. Oktober 1993 --- | 1 | |
| X | DE 32 35 559 A (METALLGESELLSCHAFT AG) 24. Mai 1984 * Anspruch 1 * --- | 1 | |
| X | US 4 810 478 A (GRAF ROLF) 7. März 1989 * Zusammenfassung * --- | 1 | |
| X | US 4 201 753 A (DAYEN WILLIAM R) 6. Mai 1980 * Anspruch 1 * --- | 1 | RECHERCHIERTE SACHGEBIETE (Int.Cl.6) |
| A | DATABASE WPI Derwent Publications Ltd., London, GB; AN 96262825 XP002054603 * Zusammenfassung * & JP 08 108042 A (KIM S J) 30. April 1996 --- | 1,5 | B01D |
| A | WO 86 07546 A (CATENA OY) 31. Dezember 1986 * Zusammenfassung * ----- | 6,9,10 | |

Der vorliegende Recherchenbericht wurde für alle Patentansprüche erstellt

| Recherchenort | Abschlußdatum der Recherche | Prüfer |
|---|---|---|
| DEN HAAG | 21. September 1998 | Faria, C |

EPO FORM 1503 03.82 (P04C03)